# EUROPÄISCHE PATENTSCHRIFT

(11) **EP 0 730 412 B1**
(45) Veröffentlichungstag und Bekanntmachung des Hinweises auf die Patenterteilung: **11.08.1999**
(21) Anmeldenummer: 95901409.3
(22) Anmeldetag: 22.11.1994
(51) Int. Cl.: A23J 3/34, A23K 1/16, A23K 1/14

(54) **VERFAHREN ZUR AUFBEREITUNG VON PROTEINEN AUS EINER PROTEINHALTIGEN SUBSTANZ**
PROCESS FOR PREPARING PROTEINS FROM A PROTEIN-CONTAINING SUBSTANCE
PROCEDE DE PREPARATION DE PROTEINES A PARTIR D'UNE SUBSTANCE CONTENANT DES PROTEINES

(30) Priorität: 22.11.1993 DE 4339743
(43) Veröffentlichungstag der Anmeldung: 11.09.1996
(73) Patentinhaber: NUPRON GmbH PROTEINWERK, 37176 Nörten-Hardenberg (DE)
(72) Erfinder: Neumüller, Waldemar, 37077 Göttingen (DE)
(74) Vertreter: Patentanwälte Rehberg + Hüppe
(86) Internationale Anmeldenummer: EP9403857
(87) Internationale Veröffentlichungsnummer: WO9514394

(56) Entgegenhaltungen:
- EP-A- 0 199 981
- EP-A- 0 265 099
- EP-A- 0 298 419
- EP-A- 0 480 104
- WO-A-93/06741
- DE-B- 1 203 588
- US-A- 4 473 589
- PATENT ABSTRACTS OF JAPAN vol. 015, no. 173 (C-0828) 2. Mai 1991 & JP,A,03 039 049 (AJINOMOTO CO. INC.) 20. Februar 1991
- PATENT ABSTRACTS OF JAPAN vol. 010, no. 128 (C-345) 13. Mai 1986 & JP,A,60 251 859 (KIKKOMAN KK) 12. Dezember 1985

## Beschreibung

Die Erfindung bezieht sich auf ein Verfahren zur Aufbereitung von Proteinen aus einer proteinhaltigen Substanz, wobei die Substanz in einem alkalischen Lösungsmittel mit einem pH-Wert größer als 11,5 und bet einer Temperatur von weniger als 30 °C dispergiert wird, wodurch die in der Substanz enthaltenen Proteine in Lösung gebracht werden, und wobei anschließend die Lösung neutralisiert wird und die in der Lösung enthaltenen Proteine aufkonzenntriert werden. Beispielsweise bei der Stärkegewinnung aus Kartoffeln, der Mehlgewinnung aus Getreide, der Tofuherstellung und der Ölgewinnung aus verschiedenen Pflanzen fallen proteinhaltige Substanzen als Nebenprodukte an, bet denen die Proteine in einer nicht unmittelbar verwertbaren oder einer nur minderwertigen Form vorliegen. Bet der Stärkegewinnung aus Kartoffeln handelt es sich bet der proteinhaltigen Substanz um ein denaturiertes, durch Trocknung verhorntes und nicht lösbares Kartoffelproteinkonzentrat. Die Aufbereitung dieses Kartoffelproteinkonzentrates ist besonders schwierig und steht im folgenden exemplarisch für die Aufbereitung von Proteinen aus den verschiedensten proteinhaltigen Substanzen.

Ein Verfahren der eingangs beschriebenen Art ist aus der DE-OS 41 33 538 bekannt. Dabei soll die Substanz in einem alkalischen Lösungsmittel mit einem pH-Wert von insbesondere ca. 12,5 und bet Zimmertemperatur dispergiert werden. Um dabei das Lösen der Proteine zu beschleunigen wird vorgeschlagen, die Substanz unter Homogenisation zu dispergieren. Dabei hat sich herausgestellt, daß ein rasches in Lösung Gehen bei der großtechnischen Anwendung des bekannten Verfahrens nur mit Hilfe einer Homogenisation durch Hochdruckdesintegration erreicht werden kann. Lange Aufschlußzeiten beim Lösen der Proteine in dem alkalischen Lösungsmittel führen zu Alkalischäden bet den gelösten Proteinen. Das Auftreten der Alkalischäden wird auch durch eine erhöhte Temperatur beim Dispergieren der proteinhaltigen Substanz in dem alkalischen Lösungsmittel gefördert.

Nachteilig bet den aus der DE-OS 41 33 538 bekannten Verfahren ist, daß zum Aufbereiten der Proteine aus der proteinhaltigen Substanz der Einsatz der verschiedenen Chemikalien mit großem Überschuß erfolgen muß, damit eine insbesondere kontinuierliche, großtechnische Anwendung des Verfahrens möglich ist. D. h., der Trockensubstanzanteil bei den einzelnen Verfahrensschritten ist verhältnismäßig gering und entsprechend sind die spezifischen Kosten für die verschiedenen Chemikalien und der spezifische Energieaufwand, beispielsweise beim abschließenden Aufkonzentrieren und Trocknen der Proteine, hoch. Die niedrige zulässige Trockensubstanzkonzentration bei der kontinuierlichen Durchführung des Verfahrens ist darauf zurückzuführen, daß die proteinhaltige Substanz an sich nur schwer dispergierbar ist. So muß eine wirkungsvolle Homogenisation mittels Hochdruckdesintegration auch im Bypass erfolgen. Eine einmalige Hochdruckdesintegration ist zur Homogenisation nicht ausreichend.

Weiterhin ist nachteilig, daß die nach dem bekannten Verfahren aufbereiteten Proteine im physiologischen pH-Bereich nicht löslich sind. Sie weisen zwar eine gewisse Dispergierbarkeit auf, diese ist jedoch noch von der Verfahrensführung im einzelnen abhängig. So weisen beispielsweise durch Fällung aufkonzentrierte und anschließend durch Trocknung isolierte Proteine nur eine Dispergierbarkeit auf, die zwar weit über der proteinhaltigen Substanz, aus der die Proteine gewonnen wurden, liegt, die jedoch für verschiedene Anwendungsbereiche, beispielsweise die Verwendung der Proteine als Tierfutter oder in der Lebensmittelindustrie zu gering ist.

Ein Verfahren zur Aufbereitung von Proteinen aus einer proteinhaltigen Substanz, wobei diese Substanz in einem alkalischen Lösungsmittel mit einem pH-Wert größer als 11,5 dispergiert wird, wodurch die in der Substanz enthaltenen Proteine in Lösung gebracht werden, und wobei anschließend die Lösung neutralisiert wird und die in der Lösung enthaltenen Proteine aufkonzentriert werden, ist auch aus der US-PS 4 624 805 bekannt Das Verfahren geht hinsichtlich der proteinhaltigen Substanz von unbehandelten landwirtschaftlichen Produkten, insbesondere Getreide aus. Das Getreide wird zermahlen und in das alkalische Lösungsmittel eingerührt. Zur Beschleunigung der Lösung der hier noch nativen Proteine wird die Dispersion aus Getreidemehl und alkalischem Lösungsmittel mit Ultraschall behandelt. Dabei wird eine Temperatur von maximal 54 °C eingehalten. Als geringste Temperatur beim Dispergieren in dem alkalischen Lösungsmittel sind in den Beispielen der US-PS 4 624 805 38 °C angegeben. Bei dieser Temperatur treten bereits Alkalischäden bei den aufbereiteten Proteinen auf. Die Ultraschallbehandlung der proteinhaltigen Substanz beim Dispergieren reicht zur wirksamen Beschleunigung des Lösungsvorgangs nicht aus. Darüberhinaus ist eine Ultraschallbehandlung mit hohen Energieüberträgen im großtechnischen Maßstab nicht realisierbar. Hohe Trockensubstanzanteile sind bei der kontinuierlichen Durchführung des aus der US-PS 4 624 805 bekannten Verfahren auch nicht möglich. Dem steht bereits die Ultraschallbehandlung während des Dispergierens der proteinhaltigen Substanz in dem alkalischen Lösungsmittel entgegen.

Von dem Problem der industriellen Anwendbarkeit des zuletzt beschriebenen Verfahrens geht die WO-91/12730 aus. Zu dessen Lösung wird eine Feinstvermahlung der proteinhaltigen, nativen Eingangssubstanz vorgeschlagen. Die Feinstvermahlung erfolgt nach Zugabe von Wasser zu dem zuvor zerkleinerten Getreide in einem Attritor. Anschließend wird die proteinhaltige Substanz für eine Stunde bet ca. 50 °C in dem alkalischen Lösungsmittel dispergiert. Diese Randbedingungen sind erforderlich, um eine ausreichende Proteinausbeute sicherzustellen. Gleichzeitig führen sie jedoch zwangsläufig zu Alkalischäden bei den gewonnenen Proteinen.

Beispielsweise aus dem Übersichtsartikel "Proteases" (Jens Adler-Nissen in "Enzymes in Food Processing" edited by Tilak Nagodawithana, Gerald, Academic Press, San Diego 1993) ist es bekannt, Proteine im Bereich der Lebensmitteltechnologie zur Verbesserung ihrer physiologischen Löslichkeit mit Proteasen zu behandeln Es stellt sich jedoch heraus, daß allein mit Hilfe von Proteasen ein Aufschluß der bei der Stärkegewinnung anfallenden Kartoffelproteinkonzentrate unmöglich ist. Darüberhinaus kann ein umfangreicher Proteaseneinsatz zu einer unerwünschten Bitterkeit der löslich gemachten Proteine führen.

Der Erfindung liegt die Aufgabe zugrunde, ein Verfahren der eingangs beschriebenen Art derart weiter zu entwickeln, daß seine großtechnische, insbesondere kontinuierliche Durchführung mit hohen Trockensubstanzanteilen möglich ist. Weiterhin soll eine Steigerung der Produktqualität der aufbereiteten Proteine erreicht werden.

Erfindungsgemäß wird dies dadurch erreicht, daß die proteinhaltige Substanz vor den Dispergieren in dem alkalischen Lösungsmittel mit dem pH-Wert größer als 11,5 mit einer Protease behandelt wird. Überraschenderweise stellt sich heraus, daß die anfängliche Behandlung der proteinhaltigen Substanz mit der Protease zwar nicht zum Aufschluß der Proteine ausreicht, aber die Eigenschaften der proteinhaltigen Substanz für die weitere Aufbereitung der Proteine deutlich verbessert werden. So wird ihre Dispergierbarkeit insbesondere in dem alkalischen Lösungsmittel stark erhöht, wodurch das neue Verfahren deutlich erhöhte Trockensubstanzkonzentrationen ohne Behinderungen eines kontinuierlichen Ablaufs erlaubt. Hiermit wird zugleich der Aufwand an Chemikalien wie der Energieaufwand zum Aufkonzentrieren der aufbereiteten Proteine verringert. Die Vorbehandlung mit der Protease führt aber auch dazu, daß die anschließende Lösung der Proteine in dem alkalischen Lösungsmittel stark erleichtert wird. Dies äußert sich darin, daß dieselbe Proteinausbeute in kürzerer Zeit oder durch geringeren technischen Aufwand bei der Homogenisation erhalten wird. So kann auf das zuvor noch notwendige Homogenisieren mittels Hochdruckdesintegration verzichtet werden. In Einzelfällen kann sogar ein einfaches Rühren der Dispersion ausreichen. Dies ist darauf zurückzuführen, daß die Proteine in der proteinhaltigen Substanz mit der Protease inkubiert werden, wodurch dem alkalischen Lösungsmittel ein erleichterter Angriff an den Proteinen möglich ist. Die in Lösung gebrachten Proteine weisen gegenüber ausschl. mit Proteasen behandelten Proteinen oder ausschl. mit starkem Alkali behandelten Proteinen eine abgewandelte Struktur auf. Dies ist unmittelbar auf die stufenweise Behandlung zunächst mit der Protease und dann mit dem Alkali zurückzuführen. Die nach Trocknung isolierten Proteine zeigen dabei zwar eine verbesserte Dispergierbarkeit gegenüber dem Ausgangsverfahren, eine Löslichkeit der Proteine ist jedoch nicht unmittelbar gegeben, da die Protease bei der Behandlung der Ausgangssubstanz mit dem starken Alkali üblicherweise zerstört wird und das eigentliche in Lösung Gehen der Proteine auf dem Alkali beruht.

Die proteinhaltige Substanz kann zur Behandlung mit der Protease in einer wässrigen Lauge mit einem pH-Wert von bis zu 10,5, insbesondere von ca. 9,5, und bei einer Temperatur von 30 bis 55 °C, insbesondere von ca. 40 °C, dispergiert werden, wobei eine bei den eingestellten pH-Wert aktive Protease verwendet wird. Beispielsweise kann Kartoffelprotein mit Wasser versetzt werden, so daß eine 12 bis 18%-ige Dispersion (bezogen auf die Trockensubstanz) entsteht. Die genaue Trockensubstanzkonzentration ist auf das Quellvermögen des Kartoffelproteins bei der anschließenden pH-Wert Erhöhung abzustimmen. Die Temperatur der Dispersion liegt bet 40 °C. Anschließend wird der pH-Wert auf 9,5 eingestellt und eine Protease hinzugegeben, deren Aktivitätsbereich diesen pH-Wert einschließt. Beispielsweise wäre bei pH 9,5 die Protease Trypsin geeignet.

Die Proteine werden mit der Protease ausreichend inkubiert, wenn die proteinhaltige Substanz für 15 bis 40 Min., insbesondere für ca. 30 Min. mit der Protease behandelt wird. Dabei beträgt die Aktivität der Protease vorteilhafterweise zwischen 50 und 200 I. Units, insbesondere zwischen 100 und 150 Internationalen Units, pro 1 g Proteinsubstrat. Die Aktivität der Protease ist auch darauf abzustimmen, wie die weitere Aufbereitung der in Lösung gebrachten Proteine erfolgen soll. Wenn beispielsweise eine Aufkonzentrierung durch Fällung beabsichtigt ist, darf die Aktivität der Protease nicht zu hoch gewählt werden. Umgekehrt führt eine sehr hohe Aktivität der Protease zu einem sehr gut dispergierbaren und bereits teilweise löslichen Endprodukt.

Bei dem neuen Verfahren ist eine Homogenisation der proteinhaltigen Substanz bei dem alkalischen Aufschluß nicht zwingend erforderlich. Es erweist sich jedoch als günstig, wenn die proteinhaltige Substanz in dem alkalischen Lösungsmittel mit dem pH-Wert größer als 11,5 nur kurzzeitig und unter gleichzeitiger Homogenisation dispergiert wird. Das Auftreten von Alkalischäden kann auf diese Weise minimiert werden. Natürlich ermöglicht die Homogenisation weiterhin eine allgemeine Beschleunigung des Verfahrens. Die mit dem Homogenisieren eingebrachte Wärmeenergie ist auch hier wieder zu entziehen, um einen Temperaturanstieg beim alkalischen Aufschluß zu verhindern.

Die Homogenisation kann auf verschiedene Weisen, so auch durch Ultraschalleinwirkung, Mahlen in einer Kolloidmühle und dgl. erfolgen. Als Beispiel für eine besonders geeignete Homogenisation der proteinhaltigen Substanz mit dem alkalischen Lösungsmittel ist jedoch die einmalige Hochdruckdesintegration bei mehr als 120 bar, insbesondere bei 150 bis 180 bar, anzuführen. Eine Homogenisation mittels Hochdruckdesintegration im Bypass ist im Gegensatz zu dem Ausgangsverfahren nicht erforderlich.

Wie beim Ausgangsverfahren ist jedoch ein recht hoher pH-Wert des alkalischen Lösungsmittels und eine geringe Temperatur beim Dispergieren der proteinhaltigen Substanz anzustreben. So wird die proteinhaltige Substanz vorzugsweise in dem alkalischen Lösungsmittel mit einem pH-Wert von 12,5 und bei einer Temperatur von ca. 25 °C dispergiert. Die Temperatur entspricht Zimmertemperatur.

Es wurde bereits ausgeführt, daß die dem alkalischen Aufschluß vorgeschaltete Behandlung der proteinhaltigen Substanz mit der Protease im wesentlichen Vorteile bei der Verfahrensführung ergibt und sich nicht unmittelbar in Form einer Löslichkeit des Endprodukts auswirkt. Um hier eine Löslichkeit im physiologischen Bereich zu erreichen, können die in Lösung gegangenen Proteine, insbesondere nach zumindest teilweiser Neutralisation der Lösung, erneut mit einer weiteren Protease behandelt werden. Auf diese Weise ist eine Löslichkeit des Endprodukts im physiologischen Bereich von über 90 % zu erreichen. Eine Proteasenbehandlung, die nur die bereits in Lösung gegangenen Proteine erfaßt, führt zwar zu noch höheren Löslichkeiten von 95 % und mehr. Hierbei sind jedoch nicht die Vorteile hinsichtlich der Verfahrensführung, insbesondere die Möglichkeit der hohen Trockensubstanzkonzentration gegeben. Zum Erreichen der Löslichkeit des Endprodukts ausschl. durch Proteaseneinsatz nach dem alkalischen Aufschluß muß die Protease dort in einer recht hohen Aktivität eingesetzt werden, mit der bereits die Gefahr des Auftretens von Bitterstoffen verbunden ist. Bei Proteinen, die bereits vor dem alkalischen Aufschluß mit der Protease behandelt wurden, reicht eine Aktivität der weiteren Protease aus, die zwischen 20 und 40 I. Units insbesondere zwischen 25 und 30 I. Units, pro 1 g Proteinsubstrat beträgt.

Das neue Verfahren ist auch zur Aufbereitung von Hühnereiweiß geeignet, um dieses wasserlöslich zu machen. Hierzu ist die proteinhaltige Substanz vor der Behandlung mit der Protease in der wässrigen Lauge mit einer zusätzlichen Protease in einer wässrigen Säure zu behandeln. Durch geeignete Wahl der Proteasen kann das Hühnereiweiß dabei in die Form eines wasserhaltigen Gels überführt werden.

Die Erfindung wird im folgenden anhand von Ausführungsbeispielen näher erläutert und beschrieben:

### Beispiel 1

### Lösliches Kartoffelprotein in Tierfutterqualität

Bei der Stärkegewinnung als Nebenprodukt angefallenes Kartoffelprotein wird zermahlen. Anschließend werden pro g Kartoffelprotein 5 bis 6 g Wasser zugefügt und die Temperatur der Dispersion wird auf 37 bis 40 °C erhöht. Mit 10 N-Lauge wird der pH-Wert der Dispersion zunächst auf pH 8,0 angehoben. Unter Rühren oder einer anderen Form des Durchmischens der Dispersion wird nun die alkalische Protease aus Aspergillus oryzae in einer Aktivität von 30 bis 40 I. Units hinzugegeben. Anschließend wird die Dispersion unter Durchmischen für 15 Min. auf dem eingestellten pH-Wert gehalten. Dabei nimmt die Viskosität der Dispersion ab, so daß anschließend der pH-Wert auf 9,6 durch Zugabe weiterer Lauge einstellbar ist. Daraufhin wird die Protease Trypsin mit einer Aktivität von weiteren 80 bis 100 I. Units hinzugegeben. Nach Einwirken der Protease über 15 bis 20 Min. bei konstantem pH-Wert wird die Dispersion auf Zimmertemperatur abgekühlt und der pH-Wert auf 12,5 angehoben. Dann wird mit Ultraschall je nach Energieeintrag zwischen 3 und 5 Min. oder mittels einer Passage durch einen Hochdruckdesintegrator bei 150 bis 180 bar homogenisiert. Dabei gehen die Protein in Lösung. Zur erneuten Behandlung der Proteine mit einer Protease wird der Dispersion Subtilisin Carlsberg mit einer Aktivität von 25 bis 30 I. Units zugesetzt. Innerhalb von 5 bis 7 Min. erfolgt die Proteinspaltung. Dabei ist eine Aufrechterhaltung des pH-Werts nicht erforderlich. Nach weiteren 3 Min. Rühren wird die Lösung neutralisiert und der pH-Wert auf 7,5 eingestellt. Dabei ergibt sich eine alkalische Standzeit von insgesamt nur 10 Min., obwohl die Behandlung mit der zweiten Protease im alkalischen Milieu erfolgt. Die auf pH 7,5 eingestellte Proteinlösung wird getrocknet. Die Proteine weisen nach der letzten Spaltung eine physiologische Löslichkeit bei pH 7 bis 8 von über 90 % auf. Die gewonnenen Proteine stellen ein hochwertiges, leicht zu handhabendes Tierfutter dar.

### Beispiel 2

### Lösliches Protein für den Lebensmittelbereich

Bei der Stärkegewinnung als Nebenprodukt angefallenes Kartoffelprotein wird auf bekannte Weise zunächst mit Ethanol extrahiert und anschließend durch Filtrieren oder Zentrifugieren aufkonzentriert. Die erreichte Trockensubstanzkonzentration liegt dabei zwischen 40 und 50 %. Die proteinhaltige Substanz wird dann derart mit Wasser versetzt, daß die resultierende Ethanolkonzentration maximal 15 Gewichts-% beträgt. Dabei sind je nach Ethanolgehalt Proteinkonzentrationen von 14 bis 20 % möglich. Die erhaltene Dispersion wird unter Rühren mit 10 N Lauge auf pH 9,5 und eine Temperatur von 37 bis 40 °C eingestellt. Anschließend wird die Protease Trypsin in einer Aktivität von 150 I. Units zugegeben. Unter Aufrechterhaltung des pH-Werts von 9,5 werden die Proteine in der Dispersion mit der Protease inkubiert. Dabei nimmt die Viskosität der Dispersion stark ab. Nach etwa 30 Min. wird die Temperatur auf unter 25 °C gesenkt und die Dispersion mit 10 N Lauge auf einen pH-Wert von 12,5 eingestellt. Unter Homogenisation der Dispersion mittels Hochdruckdesintegration werden die Proteine aus der proteinhaltigen Substanz in Lösung gebracht. Die nicht lösbaren Bestandteile der Substanz werden abgetrennt. Anschließend werden die in der Lösung befindlichen Proteine durch Säurezugabe bei pH 4,8 gefällt und anschließend mit Wasser zweimal gewaschen. Das so erhaltene Material wird mit Wasser aufgenommen, wobei eine Proteinkonzentration von über 12,5 % eingestellt wird. Der pH-Wert der neuen Dispersion wird dann auf pH 9,5 angehoben und die Temperatur auf 37 bis 40 °C eingestellt. Anschließend wird erneut Trypsin in einer Konzentration von 150 I. Units zugegeben. Dabei löst sich das dispergierte Protein vollständig auf. Die erhaltene Lösung wird gesplittet. Der eine Teil der Lösung dient zur Aufnahme von weiterem gefällten Kartoffelprotein, der andere Teil wird auf pH 7,5 mittels Säure neutralisiert und anschließend getrocknet. Nach Anlaufen des Verfahrens liegt die Konzentration der Proteine vor der Trocknung bei bereits 20 %. Die physiologische Löslichkeit der getrockneten Proteine liegt über 90 %.

### Vergleichsbeispiel 1

### Lösliches Protein für den Lebensmittelbereich ohne Behandlung mit einer Protease vor dem alkalischen Aufschluß

Das extrahierte Kartoffelprotein wird mit einem Trockensubstanzanteil von ca. 6 % in einem alkalischen Lösungsmittel mit einem pH-Wert von 12,5 dispergiert und unter Homogenisation mittels Hochdruckdesintegration im Bypass homogenisiert. Anschließend wird der nicht lösliche Anteil der proteinhaltigen Substanz abgetrennt, und die gelösten Proteine werden durch Säurezugabe auf pH 4,8 gefällt und abzentrifugiert. Daraufhin wird der Niederschlag wie beim Beispiel 1 zweimal mit Wasser gewaschen, der Niederschlag mit Wasser aufgenommen und der pH-Wert auf 9,5 eingestellt. Zu dieser Dispersion wird die Protease Trypsin mit einer Aktivität von ca. 250 bis 300 I. Units zugegeben. Die Behandlung mit der Protease erfolgt über 30 Min. ohne Aufrechterhaltung des pH-Werts. Dabei stellt sich selbstständig ein pH-Wert von etwa 7,5 ein, so daß ohne Säurezugabe eine Trocknung der Proteine erfolgen kann. Wie beim Beispiel 1 ist es auch hier möglich, nach 15 Min. die Proteinlösung zu teilen, um weiteres gefälltes Material aufzunehmen. Auf diese Weise kann ehenfalls die Proteinlösung auf 20 % vor der Trocknung aufkonzentriert werden.

Die Löslichkeit des getrockneten Proteins liegt mit 95 % oberhalb derjenigen beim Beispiel 1. Es werden jedoch nicht die verfahrenstechnischen Vorteile beim Aufschluß der proteinhaltigen Substanz erreicht.

Es versteht sich, daß bei den bisherigen Beispielen das vor der Trocknung nicht gelöste Protein durch Zentrifugation abgetrennt werden kann, um die Löslichkeit des Endprodukts auf nahezu 100 % zu erhöhen.

### Beispiel 3

### Lösliches Hühnereiweiß

Getrocknetes Hühnereiweiß wird im Verhältnis 1 : 4 mit Wasser versetzt und aufgerührt. Dabei ist Schaumbildung zu vermeiden. Der pH-Wert dieser Dispersion liegt um 6,2. Nach Erwärmen der Dispersion auf 45 bis 50 °C wird die Protease Papain in einer Aktivität von 50 bis 70 I. Units je 1 g Protein zugegeben. Anschließend wird die Dispersion für 20 Minuten bei konstantem pH-Wert gerührt. Nach der angegebenen Zeit wird der pH-Wert auf 8,0 erhöht und die alkalische Protease Subtilisin Carlsberg (Bacillus lichenoformis) mit einer Aktivität von ca. 50 I. Units je g Protein zugegeben. Die Proteine werden mit dieser Protease für weitere 20 Min. inkubiert. Nach Abkühlen der Lösung auf 25 °C wird der pH-Wert auf über pH 12 angehoben. Unmittelbar anschließend wird die Dispersion durch Ultraschall 5 Min. lang oder einmal durch Hochdruckdesintegration bei 180 bar homogenisiert. Sofort nach der Homogenisation wird die Lösung neutralisiert und die Protease wird nach Herstellerangabe inaktiviert. Die anschließend getrockneten Proteine sind wasserlöslich.

### Beispiel 4

### Bildung eines stabilen Proteingels aus Hühnereiweiß

Hühnereiweiß wird gemäß Beispiel 3 zunächst mit der Protease Papain behandelt. Nach Anheben des pH-Werts auf 9 erfolgt die Behandlung der proteinhaltigen Substanz mit der Protease Trypsin für 15 Min. Die Aktivität der Protease Trypsin beträgt dabei 80 bis 100 I. Units je g Protein. Bei der anschließenden pH-Erhöhung auf 12,5 tritt spontane Gelbildung auf, die durch Homogenisation mittels Ultraschall noch beschleunigt wird. Dabei reichen 3 bis 5 Min. Beschallzeit aus. Das Proteingel kann anschließend neutralisiert und getrocknet werden, wobei die Gelstruktur erhalten bleibt.

## Patentansprüche

1. Verfahren zur Aufbereitung von Proteinen aus einer proteinhaltigen Substanz, wobei die Substanz in einem alkalischen Lösungsmittel mit einem pH-Wert größer als 11,5 und bei einer Temperatur von weniger als 30 °C dispergiert wird, wodurch die in der Substanz enthaltenen Proteine in Lösung gebracht werden, und wobei anschließend die Lösung neutralisiert wird und die in der Lösung enthaltenen Proteine aufkonzentriert werden, dadurch gekennzeichnet, daß die proteinhaltige Substanz vor dem Dispergieren in dem alkalischen Lösungsmittel mit dem pH-Wert größer als 11,5 mit einer Protease behandelt wird.

2. Verfahren nach Anspruch 1, dadurch gekennzeichnet, daß die proteinhaltige Substanz zur Behandlung mit der Protease in einer wässrigen Lauge mit einem pH-Wert von bis zu 10,5, insbesondere von Ca. 9,5 und bei einer Temperatur von 30 bis 55 °C, insbesondere von ca. 40 °C, dispergiert wird, wobei eine bei dem eingestellten pH-Wert aktive Protease verwendet wird.

3. Verfahren nach Anspurch 2, dadurch gekennzeichnet, daß die proteinhaltige Substanz für 15 bis 40 min, insbesondere für ca. 30 min, mit der Protease behandelt wird.

4. Verfahren nach einen der Ansprüche 1 bis 3, dadurch gekennzeichnet, daß die Aktivität der Protease zwischen 50 und 200 I. Units, insbesondere zwischen 100 und 150 Internationalen Units, pro 1 g Proteinsubstrat beträgt.

5. Verfahren nach einen der Ansprüche 1 bis 4, dadurch gekennzeichnet, daß die proteinhaltige Substanz in dem alkalischen Lösungsmittel mit dem pH-Wert größer als 11,5 nur kurzzeitig und utner gleichzeitiger Homogenisation dispergiert wird.

6. Verfahren nach Anspruch 5, dadurch gekennzeichnet, daß die Homogenisation durch einmalige Hochdruckdesintegration bei mehr als 120 bar, insbesondere bei 150 bis 180 bar, erfolgt.

7. Verfahren nach einen der Ansprüche 1 bis 6, dadurch gekennzeichnet, daß die proteinhaltige Substanz in dem alkalischen Lösungsmittel mit einem pH-Wert von ca. 12,5 und bei einer Temperatur von ca. 25 °C dispergiert wird.

8. Verfahren nach einen der Ansprüche 1 bis 7, dadurch gekennzeichnet, daß die in Lösung gegangenen Proteine, insbesondere nach zumindest teilweiser Neutralisation der Lösung, erneut mit einer weiteren Protease behandelt werden.

9. Verfahren nach Anspruch 8, dadurch gekennzeichnet, daß die Aktivität der weiteren Protease zwischen 20 und 40 I. Units, insbesondere zwischen 25 und 30 Internationalen Units, pro 1 g Proteinsubstrat beträgt.

10. Verfahren nach Anspruch 2 oder einem der Ansprüche 3 bis 9 in Verbindung mit Anspruch 2, dadurch gekennzeichnet, daß die proteinhaltige Substanz vor der Behandlung mit der Protease in der wässrigen Lauge mit einer zusätzlichen Protease in einer wässrigen Säure behandelt wird.

## Claims

1. Process for preparing proteins from a protein-containing substance, wherein the substance is dispersed in an alkaline solvent with a pH of over 11.5 and at a temperature of under 30 °C, whereby the proteins contained in the substance are dissolved; and wherein the resulting solution is neutralized and the proteins contained in the solution are concentrated, characterized in that the protein-containing substance is treated with a protease before said dispersion in said alkaline solvent having said pH of over 11.5.

2. Process according to claim 1, characterized in that, for the treatment with the protease, the protein-containing substance is dispersed in an aqueous lye with a pH of up to 10.5, especially of about 9.5, and at a temperature of 30 to 55 °C, especially of about 40 °C, wherein a protease is used which is active in the pH range adjusted.

3. Process according to claim 2, characterized in that the protein-containing substance is treated with the protease for 15 to 40 min., especially for about 30 min.

4. Process according to one of the claims 1 to 3, characterized in that the activity of the protease is between 50 and 200 I. Units, especially between 100 and 150 International Units, per 1 g protein substrate.

5. Process according to one of the claims 1 to 4, characterized in that the protein containing substance is dispersed in said alkaline solvent having said pH of over 11,5 only for a short period of time while homogenizing.

6. Process according claims 5, characterized in that the homogenizing is carried out by means of high pressure disintegration at over 120 bar, especially at 150 to 180 bar.

7. Process according to one of the claims 1 to 6, characterized in that the protein-containing substance is dispersed in said alkaline solvent having a pH of 12.5, and at a temperature of about 25 °C.

8. Process according to one of the claims 1 to 7, characterized in that the dissolved proteins are additionally treated with a further protease, especially after at least partially neutralizing the solution.

9. Process according to claims 8, characterized in that the activity of the further protease is between 20 and 40 I. Units, especially between 25 and 30 International Units, per 1 g protein substrate.

10. Process according to claim 2 or to one of the claims 3 to 9 in connection with claim 2, characterized in that the protein-containing substance is treated with a further protease in an aqueous acid before the treatment with said protease in said aqueous lye.

## Revendications

1. Procédé de préparation de protéines à partir d'une substance contenant des protéines, la substance étant dispersée dans un solvant alcalin d'un pH supérieur à 11,5 et à une température inférieure à 30 °C, ce qui fait que les protéines contenues dans la substance sont amenées en solution, et la solution étant ensuite neutralisée et les protéines contenues dans la solution étant concentrées, caractérisé en ce que la substance contenant des protéines est traitée avec une protéase avant la dispersion dans le solvant alcalin d'un pH supérieur à 11,5.

2. Procédé selon la revendication 1, caractérisé en ce que pour le traitement avec la protéase, la substance contenant des protéines est dispersée dans une solution aqueuse alcaline d'un pH allant jusqu'à 10,5, en particulier d'environ 9,5 et à une température de 30 à 55 °C, en particulier d'environ 40 °C, une protéase active au pH réglé étant utilisée.

3. Procédé selon la revendication 2, caractérisé en ce que la substance contenant des protéines est traitée avec la protéase pendant 15 à 40 min., en particulier pendant environ 30 min.

4. Procédé selon l'une des revendications 1 à 3, caractérisé en ce que l'activité de la protéase est comprise entre 50 et 200 I. Units, en particulier entre 100 et 150 International Units, pour 1 g de substrat de protéine.

5. Procédé selon l'une des revendications 1 à 4, caractérisé en ce que la substance contenant des protéines est dispersée dans le solvant alcalin de pH supérieur à 11,5 uniquement pendant une courte durée et avec homogénéisation simultanée.

6. Procédé selon la revendication 5, caractérisé en ce que l'homogénéisation s'effectue par désintégration unique sous haute pression supérieure à 120 bar, en particulier sous 150 à 180 bar.

7. Procédé selon l'une des revendications 1 à 6, caractérisé en ce que la substance contenant des protéines est dispersée dans le solvant alcalin d'un pH supérieur à environ 12,5 et à une température d'environ 25 °C.

8. Procédé selon l'une des revendications 1 à 7, caractérisé en ce que les protéines passées en solution, en particulier après neutralisation au moins partielle de la solution, sont traitées à nouveau avec une autre protéase.

9. Procédé selon la revendication 8, caractérisé en ce que l'activité de l'autre protéase est comprise entre 20 et 40 I. Units, en particulier entre 25 et 30 International Units, pour 1 g de substrat de protéine.

10. Procédé selon la revendication 2 ou l'une des revendications 3 à 9 en liaison avec la revendication 2, caractérisé en ce que la substance contenant des protéines est traitée avec une protéase supplémentaire dans un acide aqueux, avant le traitement avec la protéase dans la solution aqueuse alcaline.
